# EUROPEAN PATENT APPLICATION

(11) **EP 1 473 731 A2**
(43) Date of publication of application: **03.11.2004**
(21) Application number: 04005443.9
(22) Date of filing: 08.03.2004
(51) Int. Cl.: G11B 27/34, H04N 5/85, G06F 17/30, G11B 27/10

(54) **Reproducing apparatus**

(30) Priority: 28.04.2003 JP 2003124118
(71) Applicant: Kabushiki Kaisha Toshiba, Tokyo (JP)
(72) Inventor: Fujiwara, Kenji Toshiba Corporation, Minato-ku Tokyo 105-8001 (JP)
(74) Representative: Henkel, Feiler & Hänzel

(57) **Abstract**

A DVD eigen number acquiring section (7) acquires an identification number of an optical disk loaded in an optical disk reproducing apparatus (1). A control section (2) transmits the identification number to a subtitle server (21) over a communication network via a communication control section (5) and requires that the subtitle server searches for subtitle information of video software recorded on the optical disk.
The control section (2) receives a search result from the subtitle server (21) and receives the subtitle information from the subtitle server in the case where the subtitle information exists. An output section (12) synthesizes the received subtitle information with video pictures reproduced from the optical disk to output the synthesized pictures.

## Description

The present invention relates to an optical disk reproducing apparatus which obtains external subtitle information to display it at the time of reproduction of video information recorded on an optical disk such as a DVD.

In the case where, in DVD video software on the market or of a rental service, for example, video software of a foreign film, is reproduced, Japanese subtitles are displayed together with the reproduced video picture.

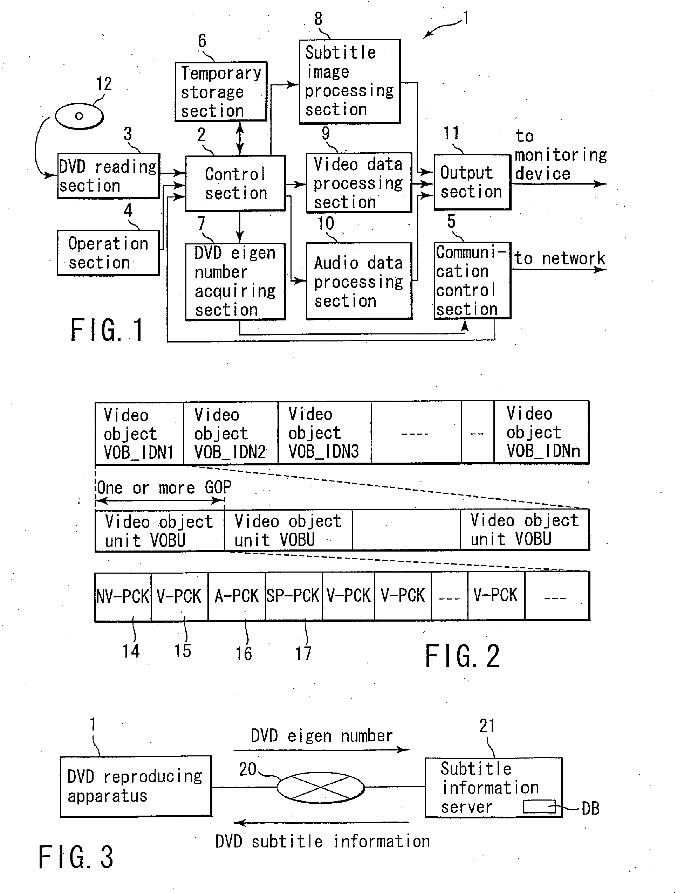

A system in which the language of subtitles or voice can be selected is disclosed, for example, in Jpn. Pat. Appln. KOKAI Publication No. 2002-27429 (p. 4 and FIG. 1). In a television or video apparatus in accordance with the system of this official gazette, voice or subtitle data in the language that a user has selected is downloaded from a site on the Internet. The television or video apparatus receives a video signal of a broadcast of a program or a movie and reproduces the voice or subtitle data downloaded in synchronization with the reproduction of the video signal. Accordingly, a user can view and listen to a program or movie which is broadcast through a language which is different from the user's mother tongue by dubbing in the mother tongue or by subtitles.

In the case of the above-mentioned official gazette, it is necessary for a user to access a web site on the Internet in advance before the time when the broadcast of a desired program or movie is started to download subtitle information in the user's mother tongue.

In the case of a conventional DVD reproducing apparatus, only subtitles in a language which is determined in the first place have to be displayed. In the case where a problematical expression or mistranslation is known in the subtitle information after the DVD has gone on the market, the DVD has to be collected, and no other measures can be taken.

It is an object of the present invention to automatically display subtitles in a language which have not been recorded on the DVD or subtitles in which a problematical portion which has been found after the DVD has been distributed widely has been corrected according to a request of a user at the time of reproduction of the DVD.

According to one aspect of the present invention, there is provided a reproducing apparatus which receives subtitle information from a server over a communication network, comprising: a section which acquires an .identification number of a recording medium loaded in the apparatus, transmits the identification number to the server over the communication network, and requires that the server searches for subtitle information of video software recorded on the recording medium; a section which receives a search result from the server and receives the subtitle information from the server when the subtitle information exists; a section which reproduces video information recorded on the recording medium; and a section which synthesizes the subtitle information received by the receiving section with video pictures reproduced by the reproducing section to output.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the configuration of a DVD reproducing apparatus according to one embodiment of the present invention.
FIG. 2 is a diagram showing a format of data recorded on a DVD.
FIG. 3 is a diagram showing an outline of a system in which a DVD reproducing apparatus 1 and a subtitle server 21 are connected to the Internet.
FIG. 4 is a flowchart showing operations of the case where the DVD reproducing apparatus downloads information related to subtitles from the subtitle server to reproduce it.
FIG. 5 is a flowchart showing operations of the case where the DVD reproducing apparatus downloads information related to subtitles from the subtitle server to reproduce it.
FIG. 6 is a flowchart showing operations of the case where the DVD reproducing apparatus downloads information related to subtitles from the subtitle server to reproduce it.
FIG. 7 is a flowchart showing operations of the case where the DVD reproducing apparatus downloads information related to subtitles from the subtitle server to reproduce it.
FIGS. 8A and 8B are views showing screens for sending inquiries as to whether or not information related to subtitles should be downloaded from the subtitle server.

Embodiments of the present invention will be described in detail below with reference to the drawings.

FIG. 1 is a block diagram showing the configuration of a DVD reproducing apparatus 1 as an optical disk reproducing apparatus to which the present invention is applied.

The DVD reproducing apparatus 1 is comprised of a control section 2, a DVD reading section 3, an operation section 4, a communication control section 5, a temporary storage section 6, a DVD eigen number acquiring section 7, a subtitle image processing section 8, a video data processing section 9, an audio data processing section 10, and an output section 11. The control section 2 includes a ROM in which a control program including a program according the present invention is stored, a CPU which synthetically controls the apparatus according to the control program, and a RAM employed as a work area. The operation section 4 is a user interface in which various instructions are input from a user. The DVD reading section 3 includes a disk drive and reads information recorded on a DVD 12 loaded in this disk drive. The DVD 12 is a read-only disk which can be obtained as video software on the market or of a rental service in the case of the present embodiment. The DVD reading section 3 can read information recorded on a CD (compact disk).

The communication control section 5 is connected to a communication network such as the Internet to receive, for example, subtitle information, from a server over a network. The temporary storage section 6 temporarily stores data read by the DVD reading section 3, subtitle information received from the communication control section 5, and the like. The subtitle image processing section 8 converts subtitle information recorded on the DVD 12 and/or subtitle information obtained via the communication control section 5 into image information (bitmap image). The video data processing section 9, for example, decodes video data read by the DVD reading section 3. The audio data processing section 10, for example, decodes audio data read by the DVD reading section 3. The output section 11 digital-to-analog converts audio data obtained from the audio data processing section 10, synthesizes a subtitle image obtained by the subtitle image processing section 8 and a video picture obtained by the video data processing section 9, and digital-to-analog converts the synthesized one to output it to a monitor device such as a television.

FIG. 2 shows a format of data recorded on a DVD. Video data and audio data are recorded on a DVD as a video file. A video file is composed of a plurality of VOBs (video objects), one VOB is composed of a plurality of VOBUs (video object units), and one VOBU is composed of a plurality of packs. As a pack, there exist a navigation pack (NV_PCK) 14, a video pack (V_PCK) 15, an audio pack (A_PCK) 16, a sub video pack (SP_PCK) 17, and the like.

The navigation pack 14 includes information as to where a next video picture is recorded or the like and can be employed as control data for special reproduction such as fast-forwarding/fast-rewinding or the like. The video pack 15 is the pack obtained by compressing video data by the MPEG2 format. The video pack 16 is the pack obtained by processing audio data by a format such as, for example, linear PCM, MPEG, or AC3. The sub video pack 17 includes subtitle information displayed at the time of reproduction of a foreign film or the like.

A time stamp such as a PTS (presentation time stamp) showing a reproduction time, a DTS (decoding time stamp) showing a decoding time, or the like, is described suitably in a pack. Reproduction is performed based on a time shown by such time stamp.

One video object (VOB) corresponds to, for example, one scene of a movie. A reproduction time of one video object unit (VOBU) is generally the reproduction time of video data constituted by one or more video groups (GOP: group of pictures) contained in a video object unit. In general, one GOP is approximately 0.5 seconds in the MPEG2 standard, and during this period, video data which has been compressed in order to reproduce about 15 video frames is stored.

FIG. 3 is a diagram showing an outline of a system in which the DVD reproducing apparatus 1 and a subtitle server 21 are connected to a communication network 20 such as the Internet.

In the subtitle information server 21, subtitle information for individual DVDs is stored, and the server 21 is provided with a function by which a designated DVD's subtitle information is returned to an information requester.

The DVD reproducing apparatus 1 acquires a DVD eigen number for identifying a DVD (video software recorded on a DVD) from the DVD eigen number acquiring section 7. The DVD reproducing apparatus 1 forwards the DVD eigen number from the communication control section 5 to the subtitle information server 21 through the Internet 20. When information related to subtitles of a specified DVD (subtitle information in a language which is not recorded on the DVD or correction information for subtitles) exists in the subtitle information server 21, the information related to subtitles is transmitted to the DVD reproducing apparatus 1 of the requester. The DVD reproducing apparatus 1, when receiving the information related to subtitles from the communication control section 5, converts the information to image data by the subtitle image processing section 8 and synthesizes it with the output of the video data processing section 10 to output it from the output section 11.

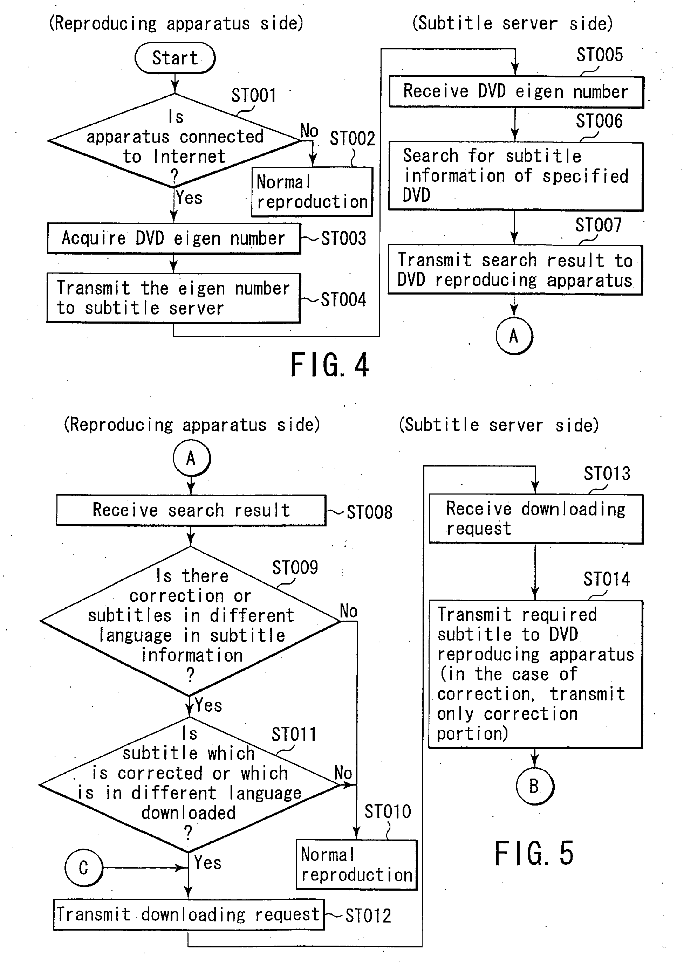

FIGS. 4 to 7 are flowcharts showing operations of the case where correction corresponding to subtitle information recorded on the DVD 12 or subtitles in another language is/are downloaded from the subtitle server 21 on the Internet to the DVD reproducing apparatus 1 and reproduced. In FIGS. 4 and 5, left side and right side flowcharts show operations of the DVD reproducing apparatus 1 and the subtitle server 21, respectively.

First, when reproduction is directed in the state where the DVD 12 on which video software such as a movie is recorded is loaded in the reproducing apparatus 1 or has already been loaded, the control section 2 confirms whether or not the apparatus 1 is connected to the Internet (ST001), and the DVD is normally reproduced when it is not connected (ST002).

When the apparatus 1 is connected to the Internet (YES in ST001), the control section 2 acquires a DVD eigen number from the loaded DVD 12 (ST003). Then, the control section 2 sends the acquired DVD eigen number to a subtitle server via the Internet (ST004) to require a search for subtitle information.

This eigen number is an identification number for specifying video software recorded on a DVD and can be acquired by, for example, referring to BCA (burst cutting area) code stored in a BCA of the DVD. The BCA indicates an area with a radius of 22.3 mm to 22.5 mm from the center of a DVD, and a bar code recorded on this area is the BCA code.

The subtitle server 21, when receiving the DVD eigen number (ST005), examines whether or not there is/are a correction for subtitles or subtitles in another language which have not been recorded on the DVD 12, corresponding to the DVD eigen number by searching a database DB (ST006) and transmits a search result to the reproducing apparatus 1 (ST007).

Upon receiving the search result from the subtitle server 21 (ST008), the DVD reproducing apparatus 1 determines whether or not there exist(s) a correction in subtitle information and/or subtitles in another language which have not been recorded on the DVD in the subtitle server based on the search result (ST009), and in the case where they do not exist, the DVD is normally reproduced (ST010).

In the case where a correction in subtitle information or subtitles in another language exist in the subtitle server (YES in ST009), the control section 2 inquires of the user whether or not the user wants to download the correction of the subtitle information or the subtitles in another language from the subtitle server 21 (ST011), and when downloading is not performed, the DVD 12 loaded in the apparatus is normally reproduced (ST010). Here, the downloading means that data is transmitted from a network server such as the subtitle server 21 to a terminal unit such as the DVD reproducing apparatus 1 to be stored in a storage section of the terminal unit.

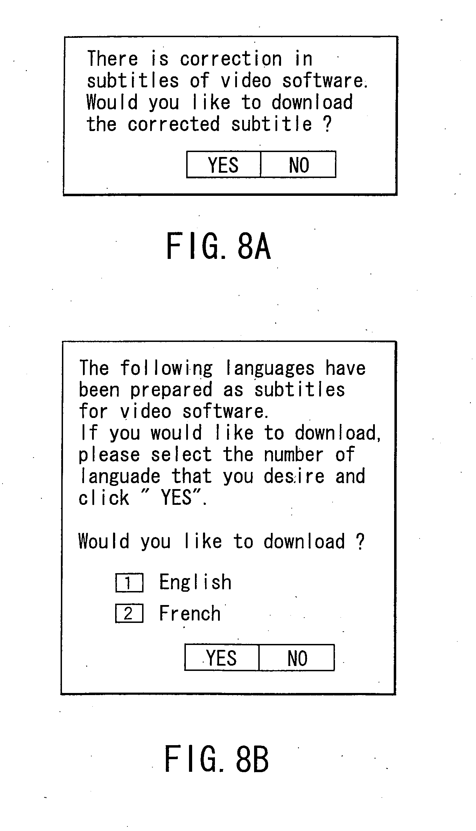

In this inquiry, for example, images such as of FIGS. 8A and 8B are output from the output section 11 and are displayed on a screen such as of a television. FIG. 8A is a screen for inquiring as to whether a corrected subtitle should be downloaded in the case where a mistranslation or problematical expression is included, for example, in Japanese subtitles recorded on the DVD 12. FIG. 8B is a screen for inquiring as to which language's subtitles should be downloaded in the case where, for example, English and French subtitles have been prepared in the subtitle server 21 other than Japanese subtitles which have been recorded on the DVD 12.

When downloading is ordered by a user (YES in ST011), the control section 2 transmits an instruction that a correction of subtitles or subtitle information in another language should be downloaded to the subtitle server 21 (ST012).

Upon receiving the instruction requiring downloading from the reproducing apparatus 1 (ST013), the subtitle server 21 reads the correction for subtitles or the subtitle information in another language from the database DB and transmits it to the reproducing apparatus 1 (ST014). At this time, in the case where downloading of correction information for subtitles is instructed, the subtitle server 21 transmits only the sub video pack 17 (see FIG. 2) including a correction portion in the present embodiment although the subtitle server 21 may transmit a correction edition of the subtitle information (entire subtitle corrected) to the reproducing apparatus 1. Transmitting only a sub video pack including a correction portion as in this embodiment can make transmission time shortened.

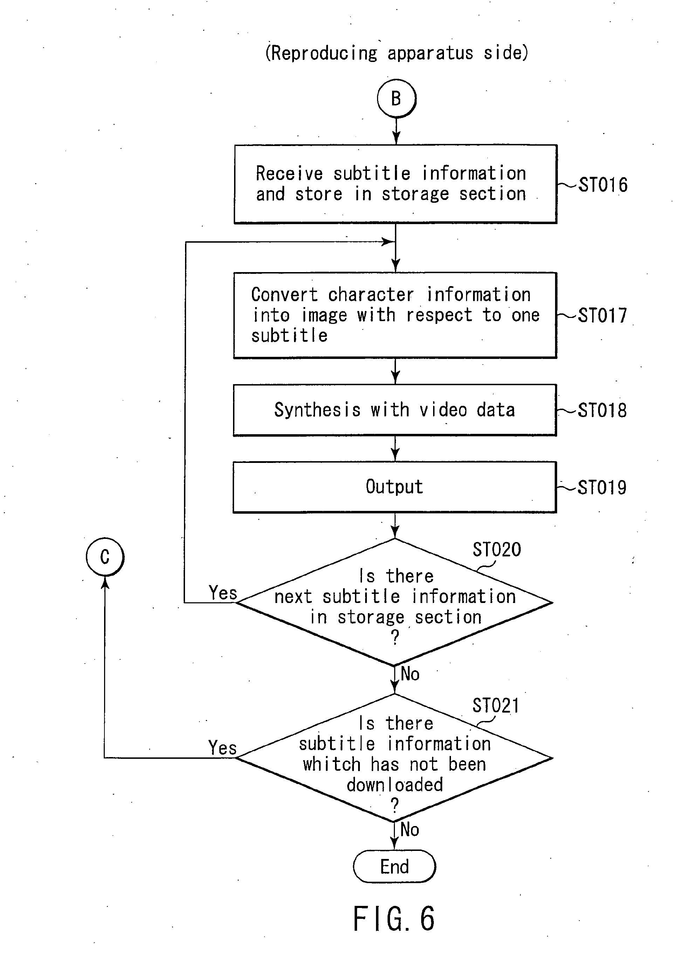

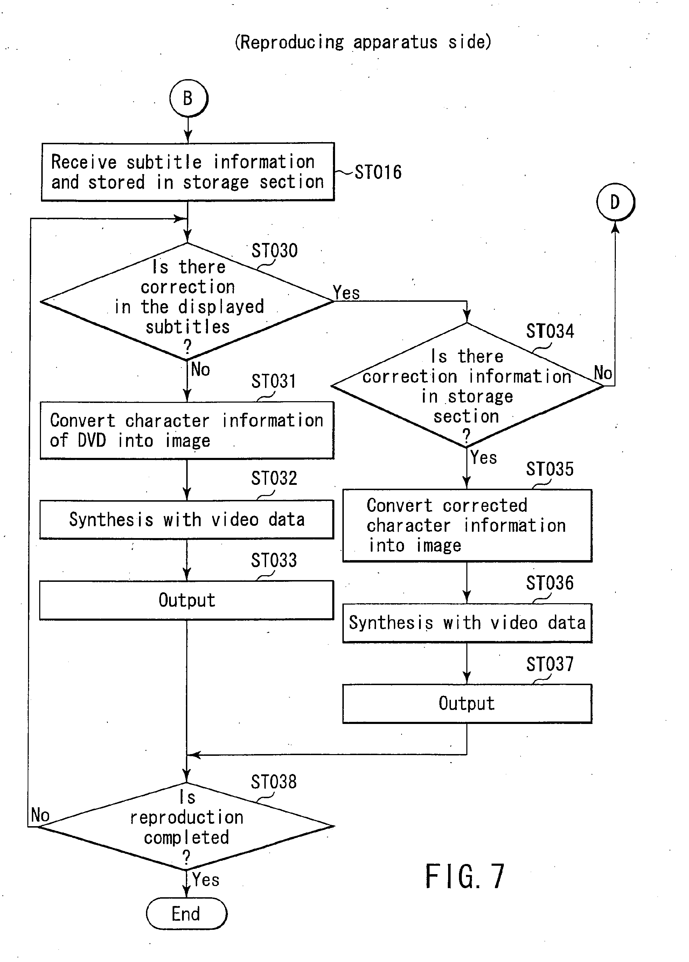

The control section 2 receives the correction subtitle information or subtitle information in another language from the subtitle server and stores the received subtitle information, for example, in the temporary storage section 6 (ST016). Processing thereafter differs in the case where the subtitle information in another language is downloaded and in the case where only the correction portion in the subtitles is downloaded. FIG. 6 is a flowchart of the case where the subtitle information in another language is downloaded, and FIG. 7 is a flowchart of the case where only the correction portion in the subtitles is downloaded.

First, operations of the case of FIG. 6 where the subtitle information in another language is downloaded will be described.

The control section 2 reads character information of subtitles from the temporary storage section 6 and

converts it to a character image with respect to one subtitle displayed on a screen such as of a monitoring device (ST017). The output section 11 synthesizes this character image corresponding to video pictures reproduced by the video data processing section 9 with the reproduced image and outputs it. In the case where character information regarding a subtitle which will be displayed next exists in the temporary storage section 6 (YES in ST020), the control section 20 reads the character information from the temporary storage section 6 with respect to the subtitle which will be displayed next on the screen and converts it to a character image (ST017). The output section 11 synthesizes this character image and the video pictures reproduced by the video data processing section 9 and output it (ST018, ST019). Until all character information of subtitles is read out from the temporary storage section 6, steps ST017 to ST020 are repeated.

In the case where character information regarding a subtitle which will be displayed next does not exist in the temporary storage section 6 (NO in ST020), the control section 20 determines whether or not there is subtitle information which has not been downloaded from the subtitle server 21. In the case where there is (YES in ST 021), the flow proceeds to step ST012, requiring that the subtitle server 21 downloads remaining subtitle information (S012). The subtitle server 21 transmits the required remaining subtitle information to the reproducing apparatus 1 (S015). Until all subtitle information is transmitted to the reproducing apparatus 1 and is output by the output section 11, steps ST012 to ST021 are repeated.

Next, operations in the case of FIG. 7 where only a correction portion of subtitles is downloaded will be described.

In the case where there is no correction in one subtitle displayed on a screen of a monitoring device or the like (NO in ST30), the control section 2 converts character information contained in the subtitle information which has been recorded in advance on the DVD to a subtitle image at the subtitle image processing section 8 (ST030 and ST031). This subtitle image is synthesized with video data processed by the video data processing section 9 (ST032) and is output to a monitoring device such as a television (ST033) by the output section 11.

In the case where there is a correction in a subtitle displayed (YES in ST30), the control section 2 determines whether or not there is any correction information in the temporary storage section 6 (ST034). In the case where there is correction information in the temporary storage section 6 (YES in ST034), the control section 2 performs conversion to image information and synthesis with video data with respect to one subtitle of subtitle information downloaded so that a synthesized one is output from the output section (ST035 to ST037).

In the case where there is no correction information in the temporary storage section 6 (NO in ST034), the flow proceeds to step ST012, remaining correction subtitle information is downloaded from the subtitle server 21 to the reproducing apparatus 1, and operations of the above-mentioned steps ST030 to ST037 are repeated until reproduction of video data is completed as in step ST038.

Subtitles in a language which have not been recorded on a DVD or subtitles in which a problematical portion which has been found after the DVD has been distributed widely has been corrected can be displayed automatically according to a request of a user at the time of reproduction of the DVD. By storing subtitle information stored in the temporary storage section 6 in a storage medium (not shown) which maintains information even when the power supply of the apparatus is cut off, such as a non-volatile memory or HDD (hard disk drive), the subtitle information can be displayed without being downloaded at the second DVD reproduction time and thereafter. Further, although downloading of subtitle information is described in the above-described embodiment, voice information in another language or corrected voice information may be downloaded.

## Claims

1. A reproducing apparatus (1) which receives subtitle information from a server over a communication network, **characterized by** comprising:
an acquiring section which acquires an identification number of a recording medium (12) loaded in the apparatus, transmits the identification number to the server over the communication network, and requires the server to search for subtitle information of video software recorded on the recording medium (2, ST003, ST004);
a receiving section which receives a search result from the server and receives the subtitle information from the server when the subtitle information exists (2, ST008, ST016);
a reproducing section (9) which reproduces video information recorded on the recording medium; and
a synthesizing section (11) which synthesizes the subtitle information received by the receiving section with video pictures reproduced by the reproducing section to output the synthesized video pictures.

2. A reproducing apparatus according to claim 1, **characterized in that** the subtitle information is a correction edition for subtitles recorded on the recording medium (12).

3. A reproducing apparatus according to claim 1, **characterized in that** the subtitle information is information of a correction portion for subtitles recorded on the recording medium (12), and the receiving section receives only the correction portion.

4. A reproducing apparatus according to claim 3, **characterized in that** the synthesizing section (11) synthesizes the received correction portion instead of a corresponding subtitle recorded on the recording medium (12) with the reproduced video pictures (ST035 to ST037).

5. A reproducing apparatus according to claim 1, **characterized in that** the subtitle information is subtitles in a language which is different from that of subtitles recorded on the recording medium (12).

6. A reproducing apparatus according to claim 5, **characterized in that** the synthesizing section (11) synthesizes the received subtitle instead of a subtitle recorded on the recording medium with the reproduced video pictures.

7. A reproducing apparatus according to claim 1, **characterized in that** the receiving section has a section which confirms with a user whether or not the subtitle information should be received from the server in the case where the subtitle information exists in the server (ST011).
